# EUROPÄISCHE PATENTSCHRIFT

(11) **EP 1 859 716 B1**
(45) Veröffentlichungstag und Bekanntmachung des Hinweises auf die Patenterteilung: **31.12.2008**
(21) Anmeldenummer: 07005345.9
(22) Anmeldetag: 15.03.2007
(51) Int. Cl.: A47J 31/46

(54) **Absperr- und Verteilerventil in einem Heißgetränkeautomaten**
Shut-off and distribution valve in a hot drinks machine
Vanne d'arrêt et de distribution dans un automate de boissons chaudes

(30) Priorität: 24.05.2006 DE 102006024272
(43) Veröffentlichungstag der Anmeldung: 28.11.2007
(73) Patentinhaber: Spengler GmbH & Co. KG, 76646 Bruchsal (DE)
(72) Erfinder: Lansche, Reinhard, 69198 Schriesheim (DE); Frank, Horst, 76703 Kraichtal (DE); Heuberger, Ralf, 76857 Alberweiler (DE)
(74) Vertreter: Kesselhut, Wolf

(56) Entgegenhaltungen:
- EP-A1- 1 106 126
- DE-A1- 19 647 384

## Beschreibung

Die Erfindung betrifft ein Absperr- und Verteilerventil für einen Heißgetränkeautomaten gemäß dem Oberbegriff von Anspruch 1.

Bei den heutzutage eingesetzten Heißgetränkeautomaten, mit denen sich eine Vielzahl von unterschiedlichen Heißgetränken zubereiten lassen, wird in der Regel für jedes Heißgetränk eine separate Brüheinheit, beispielsweise für frisch gebrühten Kaffee und frisch gebrühten Tee, beziehungsweise eine separate Mischeinheit für die Instantgetränke wie Cappuccino, Heiße Schokolade, Instanttee, Instantkaffee etc. benötigt. Zudem ist in der Regel noch eine zusätzliche Brüheinheit zur Bereitung von Espresso erforderlich, bei welcher das in einem Boiler erhitzte Heißwasser mit erhöhtem Druck unmittelbar durch das Espressopulver hindurch geleitet wird.

Aufgrund der in den bekannten Heißgetränkeautomaten herrschenden beengten Platzverhältnisse ist es hierbei wünschenswert, anstelle einer Vielzahl von einzelnen Dosier- und Absperrventilen in jeder Zuleitung zu den einzelnen Brüh- und Mischeinheiten eine zentrale Ventilanordnung einzusetzen, da hierdurch nicht nur die Kosten, sondern auch die Anzahl der erforderlichen elektrischen Zuleitungen weiter reduziert werden können.

Eine solche gattungsgemäße Ventilanordnung ist beispielsweise in der EP 1 106 126 B1 bekannt, wobei das dort gezeigte Ventil in einem Espresso- und Kaffeeautomaten zum Einsatz gelangt und zwei Rotoren aufweist, die über ein und denselben Motor in indexierter Weise angetrieben werden. Die Schrift gibt keinen Hinweis darauf, die beiden Rotoren getrennt voneinander über jeweils einen Motor anzutreiben, und einen der Auslässe des einen Rotors mit einem Einlass des zweiten Rotors über eine Verbindungsleitung zu koppeln, um die Anzahl der Brüh- und Mischeinheiten - und damit die Anzahl der unterschiedlichen Arten von Heißgetränken - zu erhöhen, die über das Ventil versorgt werden.

Demgemäß ist es eine Aufgabe der vorliegenden Erfindung, ein Abspcrr- und Verteilerventil für einen Heißgetränkeautomaten zu schaffen, welches eine kompakte Bauweise aufweist und welches die gesteuerte Zuleitung von in einem Boiler erhitztem Heißwasser zu einer Vielzahl von einzelnen Misch- und Brüheinheiten, bevorzugt zu mehr als 3 Misch- und Brüheinheiten, ermöglicht.

Diese Aufgabe wird erfindungsgemäß durch die Merkmale von Anspruch 1 gelöst.

Das erfindungsgemäße Absperr- und Verteilerventil besitzt den Vorteil, dass es aufgrund der bevorzugt zum Einsatz gelangenden Keramikscheiben, die in unmittelbarer Anlage an dem darüber angeordneten, bevorzugt einteilig gefertigten Stator anliegen, auch bei hohen Temperaturen des Heißwassers vergleichsweise unempfindlich gegen Verkalkungen und Schmutz ist.

Ein weiterer Vorteil des erfindungsgemäßen Ventils besteht darin, dass trotz der kompakten Bauweise zusätzlich ein Eingang zur Zufuhr von Druckluft in das System bereitsteht, über welchen die Zuleitungen zu den Brüh- und Mischeinrichtungen nach der dosierten Zufuhr von Heißwasser frei geblasen werden können, um die Leitungen vollständig von Flüssigkeit zu entleeren. Hierdurch wird eine erhöhte Dosiergenauigkeit, sowie eine verbesserte Temperaturkonstanz der Heißgetränke erhalten, da hierdurch wirksam verhindert werden kann, dass in den Leitungen verbleibendes, abgekühltes Restwasser vor der Zubereitung eines nächsten Getränks mit frischem Heißwasser vermischt wird, und es hierdurch zu einer Absenkung der Temperatur des nachfolgendes Getränks insgesamt kommt.

Weiterhin wird die Luft dazu benötigt, beispielsweise den Kaffeesatz zu trocknen sowie auch das Wasser durch die Leitungen und durch den Brüher zu fördern.

Darüber hinaus eröffnet die erfindungsgemäße kompakte Bauweise des Ventils mit einem ersten und einem zweiten scheibenförmigen Rotor zusätzlich die Möglichkeit, ein Sicherheitsventil über einen zusätzlichen Ausgang unmittelbar am erfindungsgemäßen Absperr- und Verteilerventil vorzusehen, welches bei der Überschreitung eines vorgegebenen Druckschwellenwertes, beispielsweise durch einen Defekt im Boiler, öffnet und das unter Überdruck stehende Heißwasser, bzw. den Wasserdampf zur Entlastung des gesamten Systems ableitet.

Das erfindungsgemäße Absperr- und Verteilerventil wird nachfolgend mit Bezug auf die Zeichnungen anhand einer bevorzugten Ausführungsform beschrieben.

In den Zeichnungen zeigen:
- Fig. 1: eine schematische seitliche Schnittansicht des erfindungsgemäßen Absperr- und Verteilerventils zur Verdeutlichung der in unterschiedlichen Ebenen übereinander angeordneten einzelnen Baukomponenten,
- Fig. 2: eine schematische Aufsicht auf das an seiner Oberseite durch einen Gehäusedeckel verschlossene Ventil mit daran angeordneten Antriebsmotoren für den ersten und zweiten Rotor,

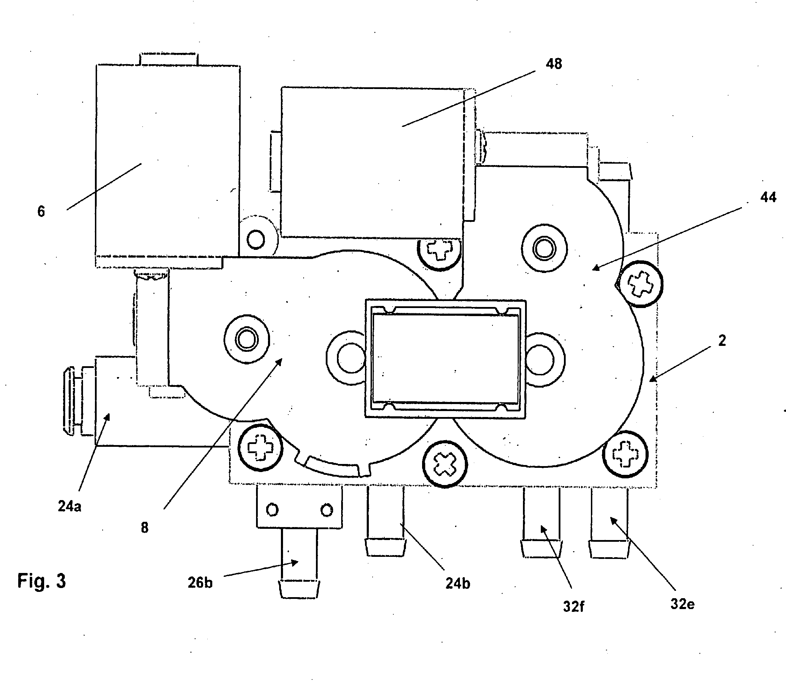

- Fig. 3: eine schematische Darstellung der Unterseite des erfindungsgemäßen Ventils,
- Fig. 4a: eine schematische, teilweise transparente Darstellung des erfindungsgemäßen Ventils in der Sperrstellung, in welcher der Heißwassereinlass des ersten Rotors in direkter Strömungsverbindung zu einem Abgang für ein nicht gezeigtes Sicherheitsventil steht,
- Fig. 4b: eine weitere schematische, teilweise transparente Darstellung des erfindungsgemäßen Ventils, bei welchem sich der erste Rotor in einer Stellung befindet, in der das über den Heißwassereinlass zugeführte Heißwasser mit hohem Druck direkt einem ebenfalls dem ersten Rotor zugeordneten Hochdruckabgang für Espresso zugeführt wird, und die übrigen Abgänge mit Ausnahme des Abgangs für das Sicherheitsventil verschlossen sind,
- Fig. 5a: eine weitere schematische Aufsicht auf das erfindungsgemäße Ventil in der Spül-Stellung, in welcher der dem ersten Rotor zugeordnete Drucklufteinlass in Strömungsverbindung mit dem Verbindungskanal zwischen dem ersten und zweiten Rotor gebracht ist, um einen der dem zweiten Rotor zugeordneten Abgänge frei zu blasen, und
- Fig. 5b-g: das erfindungsgemäße Ventil, bei welchem sich der erste Rotor in der ersten Verbindungs-Stellung befindet, und der zweite Rotor nacheinander in unterschiedliche Stellung verdreht ist, in denen das Heißwasser den dem zweiten Rotor zugeordneten sechs Abgängen für die Instant-Getränke sowie für die Frischbrüh-Getränke zugeführt wird.

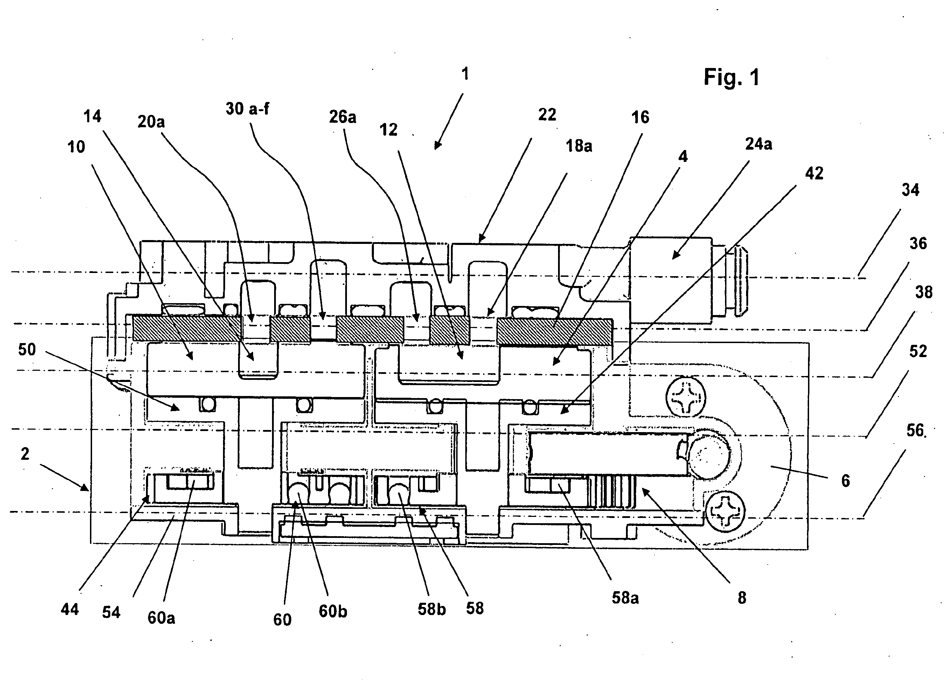

Wie in Fig. 1 gezeigt ist, umfasst ein erfindungsgemäßes Absperr- und Verteilerventil 1 in einem nicht näher gezeigten Heißgetränkeautomaten ein Gehäuse 2, in welchem ein erster scheibenartiger Rotor 4 aufgenommen ist, der über einen ersten Motor 6 und ein entsprechendes Getriebe 8 in vorgegebene erste Positionen rotierbar ist.

Im Gehäuse 2 ist weiterhin ein zweiter scheibenartiger Rotor 10 aufgenommen, der gemäß der Darstellung von Fig. 1 bevorzugt die gleiche Dicke wie der erste scheibenartige Rotor 4 besitzt und bevorzugt auch aus dem gleichen Material, insbesondere aus Keramik, gefertigt ist.

Im ersten scheibenartigen Rotor 4 ist eine erste schlitzartige Ausnehmung 12 und im zweiten scheibenartigen Rotor ist eine zweite schlitzartige Ausnehmung 14 geformt. Die Ausnehmungen können dazu beispielsweise auf der in Fig. 1 oberen Seite des Ventils 1 mit einem entsprechenden Werkzeug in die Rotoren 4, 10 eingebracht sein, und erstrecken sich bevorzugt vom Drehzentrum der Rotoren weg in radialer Richtung nach außen, wodurch sich eine besonders kompakte Bauweise in Kombination mit einer - infolge der erfindungsgemäßen Kopplung der beiden Rotoren über eine nachfolgend noch näher beschriebene Verbindungsleitung 28 - großen Anzahl von Abgängen für die Instant-Getränke sowie für die Frischbrüh-Getränke ergibt.

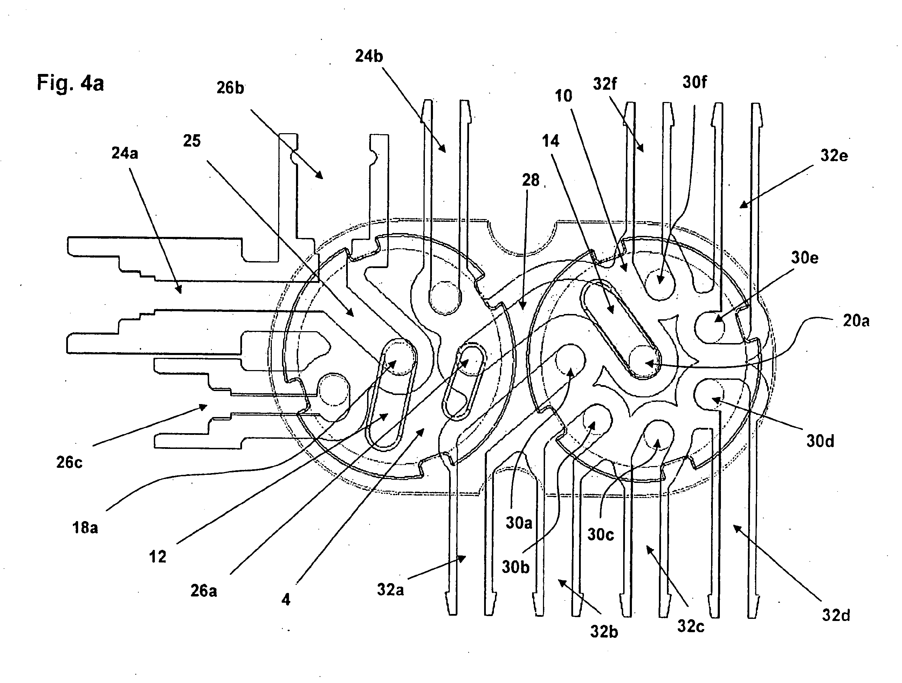

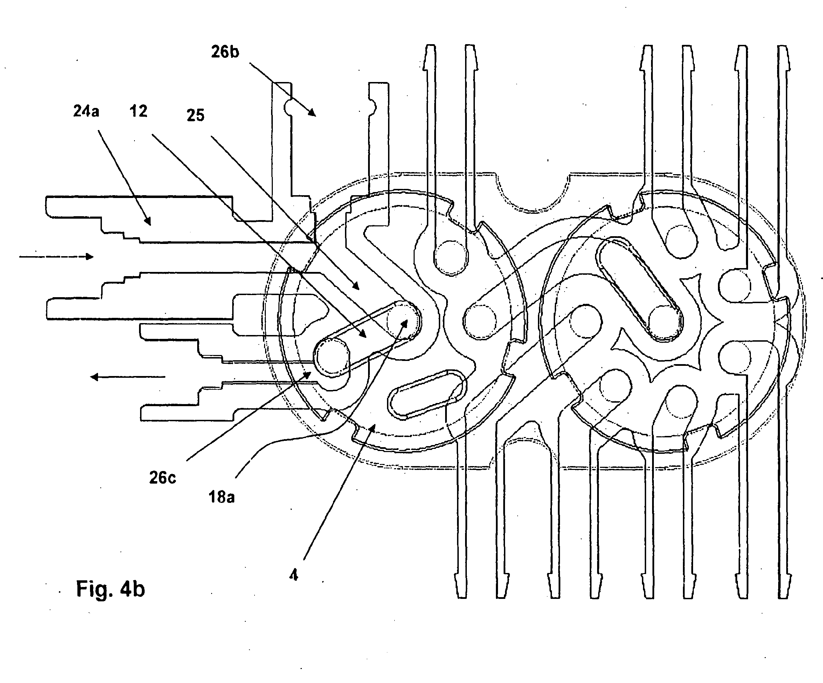

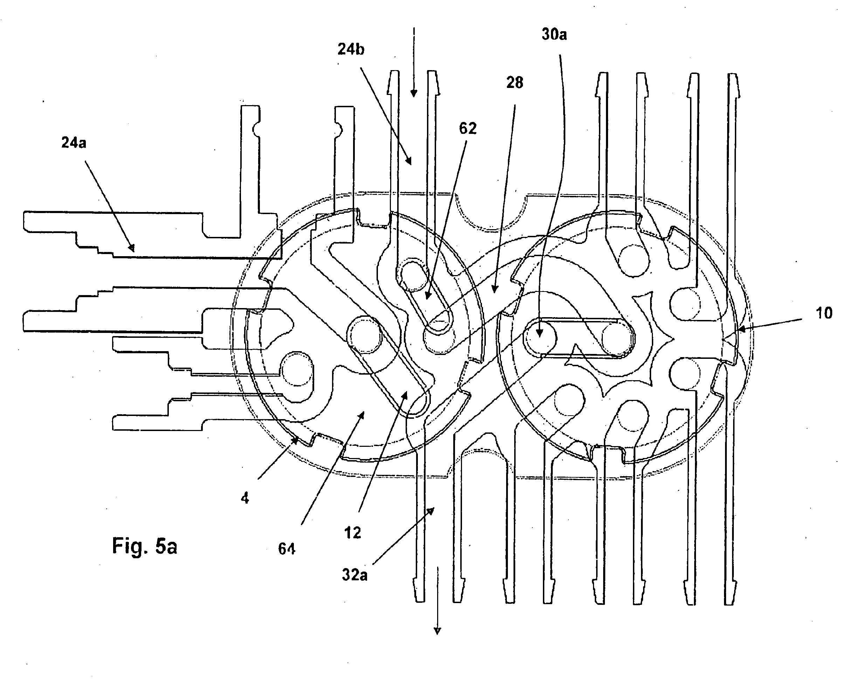

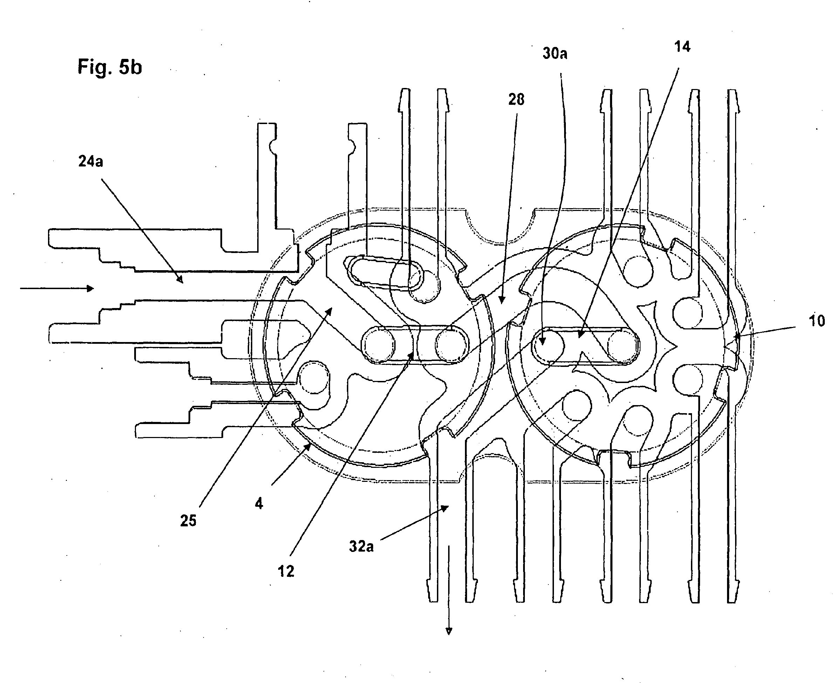

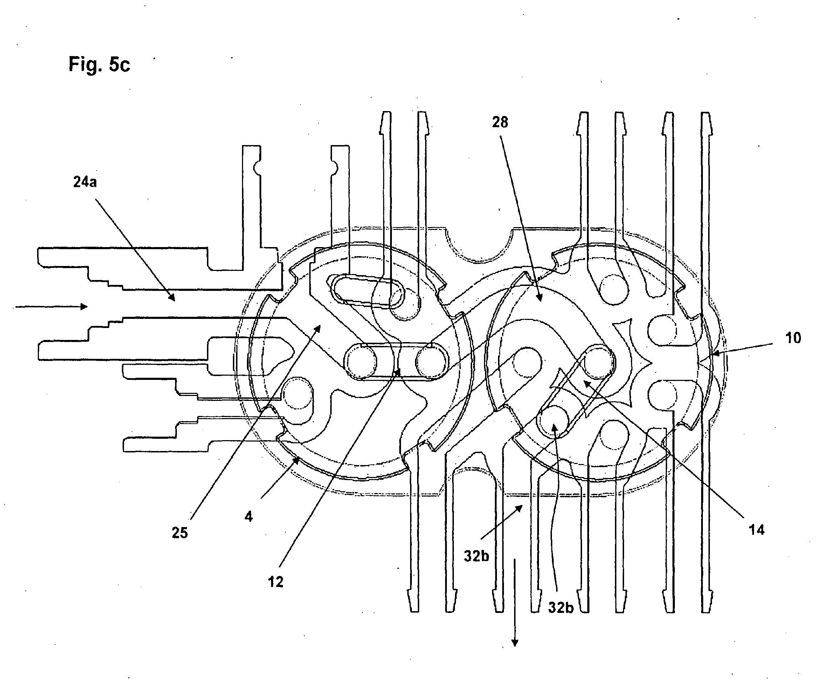

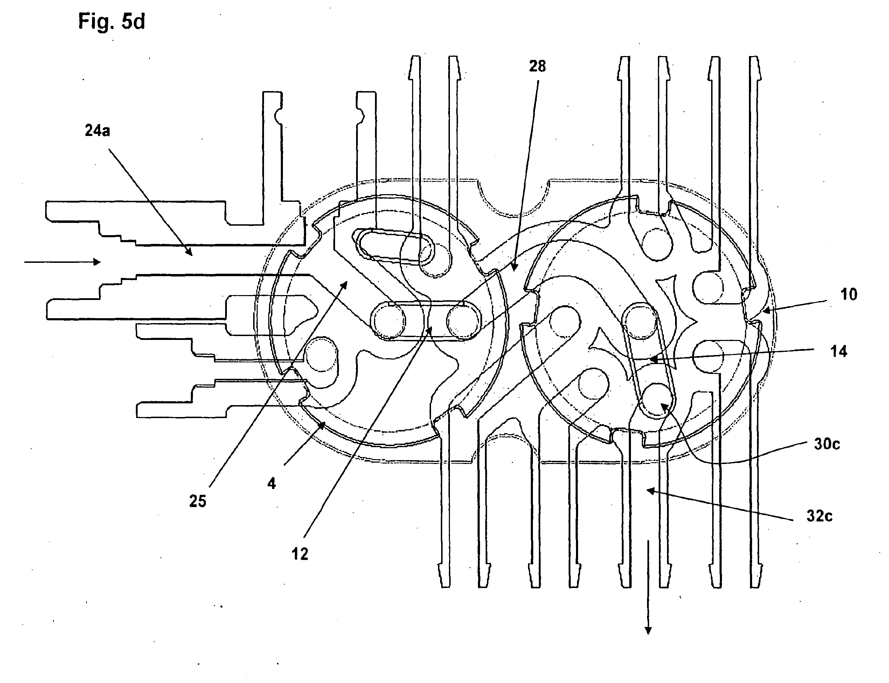

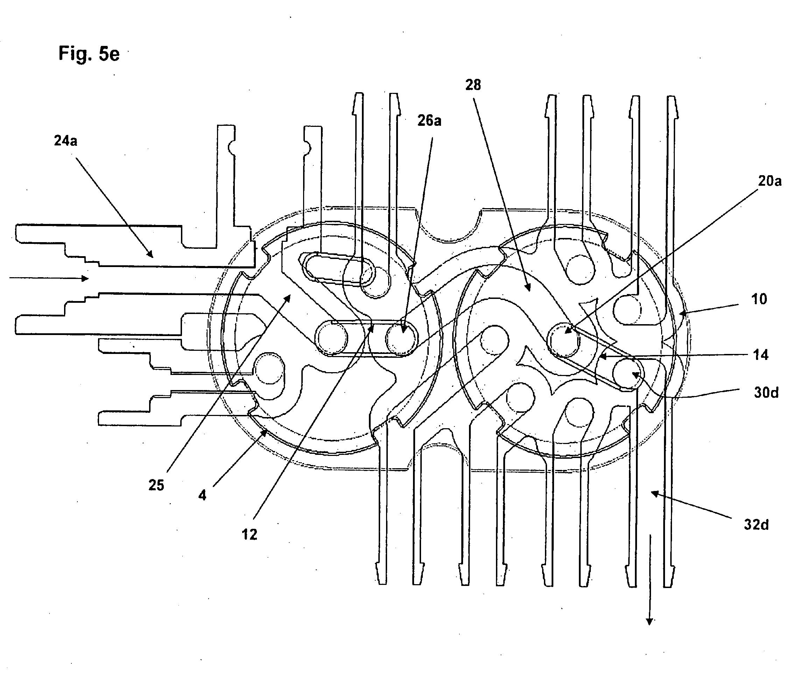

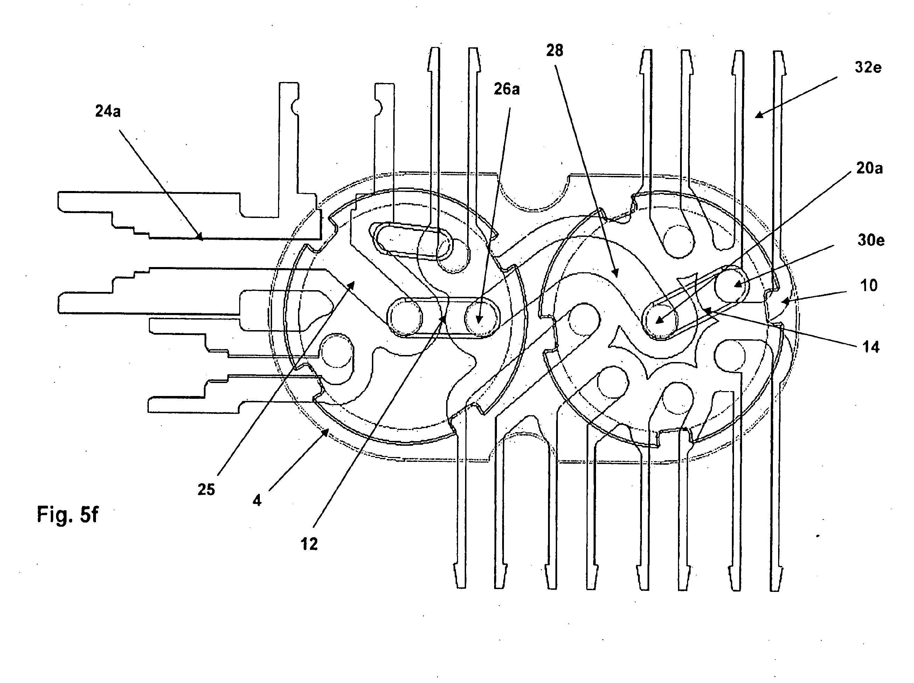

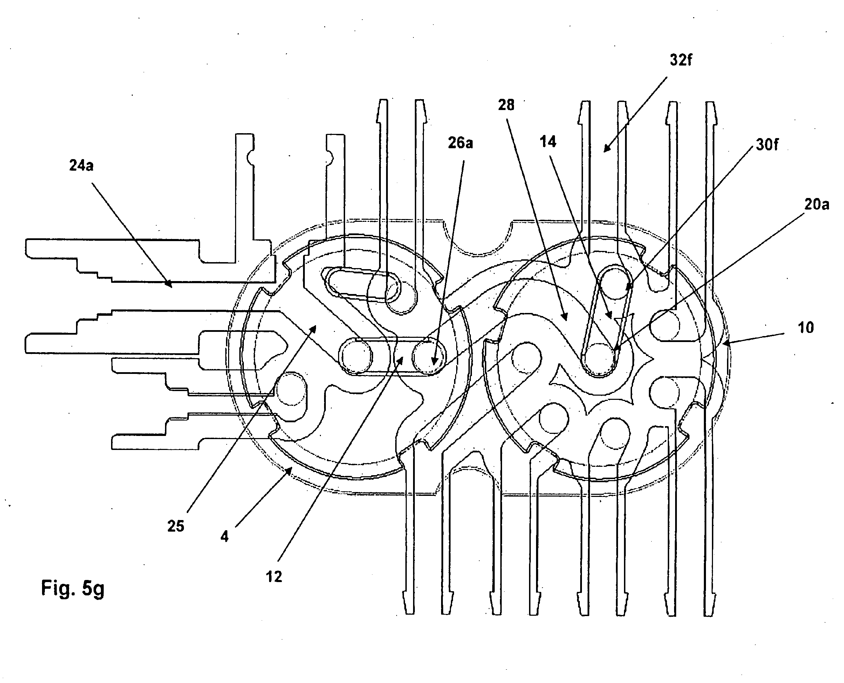

Wie der Querschnittsansicht von Fig. 1 sowie den teilweise transparenten Darstellungen der Figuren 4 und 5 weiterhin entnommen werden kann, ist dem ersten Rotor 4 und dem zweiten Rotor 10 ein Stator 16 zugeordnet, welcher bei der in den Figuren gezeigten bevorzugten Ausführungsform der Erfindung die Gestalt eines durchgehenden flachen, ebenen und bevorzugt einteiligen Bauteils besitzt, welches beispielsweise ebenfalls aus Keramik gefertigt sein kann, und welches bevorzugt im Drehzentrum des ersten Rotors 4 mit einer zentralen Zufuhröffnung/Durchtrittsöffnung 18a, und im Bereich des Drehzentrums des zweiten Rotors 10 mit einer diesem zugeordneten zentralen Zufuhrbohrung oder Durchtrittsöffnung 20a versehen ist, welche jeweils mit den zugeordneten, darunter liegenden schlitzartigen Ausnehmungen 12, 14 kommunizieren.

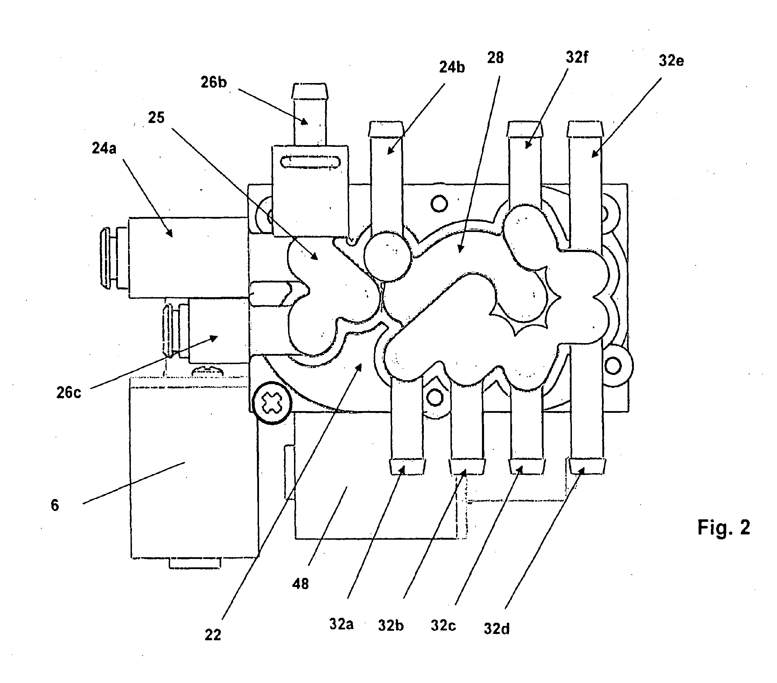

Wie der Schnittansicht von Fig. 1 sowie der Aufsicht von Fig. 2 und den teilweise halbtransparenten Schnittdarstellungen der Figuren 4 und 5 weiterhin entnommen werden kann, befindet sich oberhalb des Stators 16 ein diesen über die gesamte Länge und Breite hinweg übergreifendes Bauteil in Form eines Gehäusedeckels 22, welcher bevorzugt aus Kunststoff gefertigt ist und welcher über nicht näher bezeichnete Dichtungen, insbesondere in Form von O-Ringdichtungen, am Stator 16 dichtend anliegend auf das Gehäuse 2 aufgesetzt und über beispielsweise in Fig. 2 angedeutete, nicht näher bezeichnete Schrauben an diesem klemmend befestigt wird.

Im Gehäusedeckel 22 ist ein dem ersten Rotor 4 zugeordneter Einlass 24a für Heißwasser vorgesehen, welcher über einen nicht näher gezeigten Schlauch mit einem ebenfalls nicht näher gezeigten Heißwasserboiler in Strömungsverbindung steht, welch letztere den Einlass 24a mit Heißwasser oder auch Heißwasserdampf beaufschlagt.

Der dem ersten Rotor 4 zugeordnete Einlass 24a steht über einen im Gehäusedeckel 22 ebenfalls gebildeten Verbindungskanal 25 mit der zentralen Zufuhrbohrung 18a des ersten Rotors 4 in Strömungsverbindung, über welchen der Einlass 24a bei der in Fig. 5b gezeigten Stellung des ersten Rotors 4 über die zentrale Zufuhrbohrung 18a im Stator 16, die erste schlitzartige Ausnehmung 12 im ersten Rotor 4 und eine im Stator 16 gebildete erste Auslassbohrung 26a - die nachfolgend auch als erster Abgang 28a bezeichnet wird - mit der zuvor bereits erwähnten Verbindungsleitung 28 verbunden ist. Die Verbindungsleitung 28 ist bevorzugt ebenfalls im Gehäusedeckel 22 geformt und besitzt eine bei der bevorzugten Ausführungsform bogenförmige Gestalt nach Art eines abgeflachten " V ", wie dies in den Figuren 2 sowie 4 und 5 angedeutet ist. Die im Gehäusedeckel 22 bevorzugt als nach unten offene Nut geformte Verbindungsleitung 28 verbindet den dem ersten Rotor 4 zugeordneten ersten Abgang 26a mit der zentralen Zufuhrbohrung 20a für den zweiten Rotor 10, von wo aus das dem Einlass 24a zugeführte Heißwasser in Abhängigkeit von der jeweiligen Drehstellung des zweiten Rotors 10 über die im zweiten Rotor 10 geformte zweite schlitzartige Ausnehmung 14 und entsprechende Auslassbohrungen 30a, 30b, 30c, 30d, 30e und 30f einer entsprechenden Anzahl von Abgängen 32a - 32f zugeführt werden kann, wie dies für die aufeinander folgenden Drohstellungen des zweiten Rotors 10 in den Figuren 5b - 5g gezeigt ist.

Die dem zweiten Rotor 10 zugeordneten Abgänge 32a - 32f können hierbei gemäß der Darstellung von Fig. 2 ebenfalls als in den Gehäusedeckel 22 von der Unterseite her eingebrachte nutenförmige Kanäle ausgestaltet sein, die mit entsprechenden rohrabschnittsartigen, nicht näher bezeichneten Teilabschnitten zum Anschluss von entsprechenden Schläuchen versehen sind, über welche ein jeder der Abgänge 32a - 32f mit einer dem Abgang zugeomdeten bekannten Brüheinheit. z.B. für frisch gebrühten Kaffee oder frisch gebrühten Tee, bzw. mit einer bekannten Mischeinheit für ein Instant-Getränk, beispielsweise Instant-Kaffee, Instant-Tee, Heiße Schokolade etc. verbunden ist.

Wie in den Figuren 2, 4 und 5 darüber hinaus gezeigt ist, sind die rohrabschnittsartigen Anschlussabschnitte der Abgänge 32a, 32b und 32c bevorzugt jeweils über einen im Winkel dazu verlaufenden, im Gehäusedeckel 22 als Nut geformten, nicht näher bezeichneten Verbindungskanal mit den entsprechenden Auslassbohrungen 30a, 30b und 30c verbunden, wodurch sich in Verbindung mit der parallelen Führung der Verbindungskanäle eine besonders kompakte Bauform des Ventils 1 ergibt, bei der insgesamt 4 Abgänge 32a, 32b, 32c und 32d auf einer Seite des Gehäusedeckels 22 angeordnet sind, und sich lediglich die beiden Abgänge 32e und 32f auf der gegenüberliegenden Gehäuseseite befinden, was eine optimierte Schlauchführung innerhalb des Getränkeautomaten ermöglicht.

Bei der bevorzugten Ausführungsform der Erfindung ist dem ersten Rotor 4 weiterhin ein mit einem nicht näher gezeigten Sicherheitsventil verbundener zweiter Abgang 26b zugeordnet, welcher bevorzugt unabhängig von der Stellung des ersten Rotors 4 mit dem Einlass 24 a in Strömungsverbindung steht, um im Falle einer Störung am Boiler für eine Druckentlastung zu sorgen, welche eine Beschädigung des Ventils 1 oder auch des Boilers durch Überdruck verhindert.

Darüber hinaus ist bei der bevorzugten Ausführungsform des erfindungsgemäßen Ventils 1 ein dem ersten Rotor 4 zugeordneter dritter Abgang 26 c bevorzugt in unmittelbarer Nähe des Heißwasser-Einlasses 24a angeordnet, welcher in der in Fig. 4b gezeigten Stellung des ersten Rotors 4 über den Verbindungskanal 25, die zentrale Zuführbohrung 18 a und die erste schlitzartige Ausnehmung 12 in direkter Strömungsverbindung zum Heißwassereinlass 24 a steht, um über den dritten Abgang 26 c Heißwasser oder bevorzugt auch Heißwasserdampf unter hohem Druck einer nicht näher gezeigten bekannten Espresso-Brüheinheit zuzuführen. Durch die Anordnung des dritten Abgangs 26 c in unmittelbarer Nähe zum Einlass 24 a, bzw. durch die Zuordnung des Einlasses 24 a und des dritten Abgangs 26 c zu ein und dem selben Rotor 4 ergibt sich der Vorteil, dass dem Einlass zugeführter Heißwasserdampf ohne größeren Druckverlust und Temperaturverlust zum dritten Abgang 26 c gelangen kann. Demgegenüber erfolgt die Zufuhr des Heißwasser über den ersten Abgang oder Auslass 26 a zu der als Einlass oder Eingang des zweiten Rotors 10 dienenden zentralen Zufuhrbohrung 20a bevorzugt mit deutlich reduziertem Druck, was z.B. durch eine entsprechende Dimensionierung der Verbindungsleitung 28 erzielt werden kann. Durch diese erfindungsgemäße Unterteilung des Ventil 1 in einen ersten, dem ersten Rotor 4 zugeordneten Hochdruckbereich und einen zweiten, dem zweiten Rotor 10 zugeordneten Niederdruckbereich ergibt sich der Vorteil, dass infolge der unterschiedlichen Druckbereiche sich die Gesamtbelastung des erfindungsgemäßen Ventils insgesamt reduziert.

Nach einem weiteren, der Erfindung zugrunde liegenden Gedanken, der eine besonders kompakte und auch kostengünstige Bauweise ermöglicht, befinden sich der Verbindungskanal 28, der Heißwassereinlass 24 a sowie die Abgänge 26 b, 26 c für den Hochdruckbereich, und bevorzugt auch die Abgänge 32 a bis 32 f für den Niederdruckbereich in einer ersten Ebene 34.

Demgegenüber ist (vergl. Fig. 1) der Stator 16 in einer zweiten, darunter liegenden Ebene 36 angeordnet und der erste Rotor 4 sowie der zweite Rotor 10 liegt in einer dritten, unterhalb der zweiten Ebene angeordneten Ebene 38, wodurch sich insbesondere in Kombination mit einem einteiligen Gehäuse 22 sowie einem einteiligen ebenen Stator 16 und den beschriebenen scheibenartigen, auf der Oberseite ebenfalls ebenen Rotoren 4, 10 eine besonders einfache und kostengünstige Fertigungsweise ergibt, da die erforderlichen Genauigkeiten, die für eine gute Abdichtung des Stators 16 gegen den Gehäusedeckel 22, bzw. die Rotoren 4 und 10 erforderlich ist, beispielsweise durch Überschleifen und Polieren entsprechend vorbereiteter Keramikteile erhalten werden kann.

Wie der Darstellung von Fig. 1 weiterhin entnommen werden kann, wird der erste Rotor 4 bei der bevorzugten Ausführungsform der Erfindung vom ersten Motor 6 über ein Getriebe 8 mit nicht näher bezeichneten Zahnrädern und einen damit antriebsmäßig verbundenen Mitnehmer 42 angetrieben. Demgegenüber wird der zweite Rotor 10 durch einen separaten zweiten Motor 48 und ein eigenes zweites Getriebe 44 sowie einen zweiten eigenen Mitnehmer 50 angetrieben, wobei die Mitnehmer 42, 50 und/oder auch die Zahnräder der Getriebe 8, 44 - die vorteilhafter Weise als selbsthemmende Schneckenradgetriebe ausgestaltet sind - bevorzugt in einer vierten Ebene 52 liegen.

Schließlich kann es zur Vereinfachung der Montage des Ventils 1 ebenfalls vorgesehen sein, dass die Platine 54 einer elektronischen Steuerungseinrichtung, welche die indexierte Drehung der beiden Antriebsmotore 6, 48 in ihre jeweiligen, in den Figs. 4 und 5 gezeigten Positionen steuert, bzw. steuert und regelt, in einer fünften Ebene 56 aufgenommen, ist. Durch diesen zuvor beschriebenen konstruktiven Aufbau eröffnet sich die Möglichkeit, dass die einzelnen Komponenten des erfindungsgemäßen Ventils 1 nacheinander Ebene für Ebene von der Oberseite und gegebenenfalls auch von der Unterseite des Gehäuses aus in das Gehäuse 2 eingesetzt, bzw. eingesteckt werden können.

Nach einem weiteren, der Erfindung zu Grunde liegenden Gedanken ist dem ersten Rotor 4 ein erster Drehwinkelgeber 58 zugeordnet, der wenigstens einen ersten Magneten 58 a, bevorzugt jedoch eine Vielzahl, beispielsweise 4 Magnete 58 a, und einen bevorzugt unmittelbar auf der Elektronikplatine 54 aufgenommenen Hall-Sensor 58 b umfasst, die die Position des in der fünften Ebene 56 rotierenden, den ersten Rotor 4 antreibenden Mitnehmers 42 - und damit die Position des ersten Rotors 4 - erfassen, um den Motor 6 - durch die elektronische Steuerungseinrichtung gesteuert - in indexierter Weise in die jeweiligen vorbestimmten Positionen zu rotieren, in denen der periphere Bereich der ersten schlitzartigen Ausnehmung 12 mit der ersten Auslassbohrung 26 a, (Fig. 5b - g), der Bohrung für den dritten Abgang 26 c zur Espresso-Brüheinheit, oder einem dem ersten Rotor 4 zugeordneten Einlass 24 b für Druckluft in Überlappung gebracht wird. Letzterer ist mit einer in den Figuren nicht näher gezeigten Druckgasquelle verbunden, und dient dazu, die Abgänge 32 a - f nach dem Gebrauch mit Druckluft zu spülen, um eventuell verbleibendes Restwasser aus den Zuleitungen zu den jeweiligen Misch- oder Brüheinheiten herauszudrücken.

Hierzu kann es vorgesehen sein, dass - wie in Fig. 5 a gezeigt - eine im ersten Rotor 4 geformte weitere schlitzartige Ausnehmung 62 in unmittelbarer Strömungsverbindung mit der Auslassbohrung 30 a im Stator 16 gebracht wird, während die erste schlitzartige Ausnehmung 12 im ersten Rotor 4 an ihrem peripheren Ende verschlossen wird, was beispielsweise dadurch erfolgen kann, dass diese - wie gezeigt - über einen geschlossenen Abschnitt 64 des Stators 16 geführt wird. Die weitere schlitzartige Ausnehmung 62 erstreckt sich dabei nach Art eines langlochartigen Abschnitts bevorzugt in einer Richtung, die im Wesentlichen senkrecht zur einer durch das Drehzentrum des ersten Rotors 4 verlaufenden radialen Ebene verläuft. Hierdurch ergibt sich in Kombination mit der sich in radialer Richtung erstreckenden schlitzartigen Ausnehmung 12 die zuvor beschriebene kompakte Bauweise mit einer Vielzahl von Anschlüssen/Auslässen, welche nach ihrem Gebrauch zudem jeweils auch noch einzeln mit Druckgas gespült werden können.

In gleicher Weise kann dem Antriebszahnrad des zweiten, nicht näher bezeichneten Zahnrades zum Antrieb des zweiten Rotors 10 ein entsprechend aufgebauter zweiter Drehwinkelgeber 60 zugeordnet sein, der mit einem oder mehreren Permanentmagneten 60 a besetzt ist, die über entsprechende Hall-Sensoren 60 b auf der Platine 54 aktiviert werden, um den zweiten Rotor 10 in den jeweiligen, in den Fig. 5b - f gezeigten Stellungen zu positionieren. Die Magnete 60a und 58a können hierbei bevorzugt in die Mitnehmer 42, 50 und/oder Zahnräder oder gar direkt in die Rotoren 4, 10 eingeclipst sein.

Nach einer weiteren Ausführungsform der Erfindung kann in der Rotorauflage unterhalb des ersten und/oder zweiten Rotors 4, 10 ein mit der zugehörigen schlitzartigen Ausnehmung 12, 14, kommunizierender Hohlraum vorgesehen sein, der bewirkt, dass die Rotoren durch die entstehende Differenzkraft gegen den Stator (16) gedrückt und an diesen gehalten werden, Hierzu besitzt der kommunizierende Hohlraum bevorzugt eine größere Größe als die schlitzartige Ausnehmung 12, 14, so dass von der Unterseite aus stets eine Druckkraft auf den Rotor wirkt, die diesen gegen den Stator presst und die Adhäsionskraft unterstützt.

Weiterhin kann es vorgesehen sein, dass eine Drehwinkelposition (Schließstellung) für den ersten Rotor 4 gemäß der Darstellung von Fig. 4 a angesteuert wird, in welcher keiner der Eingänge oder Abgänge mit dem Einlass 24 a in Strömungs verbindung steht.

### Liste der Bezugszeichen

- 1: erfindungsgemäßes Absperr- und Verteilerventil
- 2: Gehäuse
- 4: erster schreibenartiger Rotor
- 6: erster Motor
- 8: Getriebe für ersten Motor
- 10: zweiter scheibenartiger Rotor
- 12: erste schlitzartige Ausnehmung
- 14: zweite schlitzartige Ausnehmung
- 16: Stator
- 18 a: zentrale Zufuhrbohrung für ersten Rotor
- 20 a: zentrale Zufuhrbohrung für zweiten Rotor
- 22: Gehäusedeckel
- 24 a: Einlass für Heißwasser/Wasserdampf
- 24 b: Einlass für Druckluft
- 25: Verbindungskanal von Einlass zur zentralen Zufuhrbohrung des ersten Rotors
- 26 a: erster Abgang des ersten Rotors/Auslass
- 26 b: zweiter Abgang des ersten Rotors
- 26 c: dritter Abgang des ersten Rotors
- 28: Verbindungsleitung
- 30 a - f: Auslassbohrungen im Stator
- 32 a - f: Abgänge des zweiten Rotors
- 34: erste Ebene
- 36: zweite Ebene
- 38: dritte Ebene
- 42: Mitnehmer für ersten Rotor
- 44: Getriebe zum Antrieb des zweiten Motors
- 48: zweiter Motor
- 50: Mitnehmer für zweiten Rotor
- 52: vierte Ebene
- 54: Platine/elektronische Steuerungseinrichtung
- 56: fünfte Ebene
- 58: erster Drehwinkelgeber
- 58 a: Magnet
- 58 b: Hall-Sensor
- 60: zweiter Drehwinkelgeber
- 60 a: Magnet
- 60 b: Hall-Sensor
- 62: weitere kreissehnenabschnittsartige Ausnehmung im ersten Rotor
- 64: geschlossener Abschnitt des Stators

## Patentansprüche

1. Absperr- und Verteilerventil (1) für einen Heißgetränkeautomaten, mit einem Gehäuse (2), in welchem ein durch einen ersten Motor (6) angetriebener, in vorgegebene erste Positionen rotierbarer erster scheibenartiger Rotor (4) mit einer darin geformten ersten schlitzartigen Ausnehmung (12) sowie ein in vorgegebene zweite Positionen rotierbarer zweiter Rotor (10) mit einer darin geformten zweiten schlitzartigen Ausnehmung (14) aufgenommen sind, denen jeweils ein Stator (16) mit Durchgangskanälen (18 a, 26 a, 20 a, 30 a - 30 f) ein Einlass (24a) zur Zufuhr von zu verteilendem Heißwasser sowie eine Vielzahl von Abgängen (26 b, 26 c, 32 a - 32 f) zugeordnet sind, über welche das Heißwasser in Abhängigkeit von der Stellung des ersten und zweiten Rotors (4,10) einer Vielzahl von Brüh- und Mischeinrichtungen zuführbar ist,
**dadurch gekennzeichnet, dass** von der zweite Rotor (14) über einen separaten zweiten Motor (48) unabhängig vom ersten Rotor (4) antreibbar ist, und dass ein erster Abgang (26 a) des ersten Rotors (4) mit dem Einlass (20 a) des zweiten Rotors (10) über eine Verbindungsleitung (28) verbunden ist, derart, dass das Heißwasser in einer ersten Verbindungsstellung des ersten Rotors (4) über die Verbindungsleitung (28) dem Einlass (20 a) des zweiten Rotors (14) zugeführt wird, und über diesen in Abhängigkeit von der jeweiligen Stellung des zweiten Rotors (14) einem der dem zweiten Rotor (14) zugeordneten Abgänge (32 a bis 32 f) zuführbar ist.

2. Ventil nach Anspruch 1,
**dadurch gekennzeichnet, dass**
die Vebindungsleitung (28) sowie die Einlässe (24 a, 24 b) und Abgänge (26 c, 26 b, 32 a - 32 f) in einer ersten Ebene (34), der erste und zweite Stator (16) in einer zweiten, darunter liegenden Ebene 36, und der erste und zweite Rotor (4,10) in einer unterhalb der zweiten Ebene (36) liegenden dritten Ebene (38) angeordnet sind.

3. Ventil nach Anspruch 2,
**dadurch gekennzeichnet, dass**
der erste und zweite Stator als gemeinsamer Stator (16) ausgebildet sind, der sich in Form eines Bauteils entlang der zweiten Ebene (36) oberhalb des ersten und zweiten Rotors (4,10) erstreckt.

4. Ventil nach Anspruch 3,
**dadurch gekennzeichnet, dass**
der Verbindungskanal (28), die Abgänge (26 c, 26 b, 32 a - 32 f) sowie der Einlass (24) a für das zugeführte Heißwasser in einem sich durchgehend oberhalb des ersten und zweiten Rotors (4, 10) in der ersten Ebene 34 erstreckenden Bauteil geformt sind, welches von der ersten Ebene (34) aus nach Art eines Gehäusedeckels (22) auf das Gehäuse (2) aufsetzbar ist, und dichtend am Stator (16) anliegt.

5. Ventil nach einem der Ansprüche 2 bis 4,
**dadurch gekennzeichnet, dass**
der erste und zweite Rotor (4, 10) durch ihren zugeordneten Antriebsmotor (6, 38) über zugeordnete, in einer unterhalb der dritten Ebene (38) liegenden vierten Ebene (52) angeordnete Mitnehmer (42, 50) und/oder Zahnräder angetrieben werden.

6. Ventil nach Anspruch 5,
**dadurch gekennzeichnet, dass**
in einer unterhalb der vierten Ebene (52) angeordneten fünften Ebene (56) eine elektronische Steuerungseinrichtung mit einer Elektronik-Platine (54) zur Steuerung des ersten und zweiten Motors (6, 48) angeordnet ist.

7. Ventil nach Anspruch 5 und 6,
**dadurch gekennzeichnet, dass**
den Zahnrädern und/oder Mitnehmern (42, 50) Drehwinkelgeber (58, 60) zugeordnet sind, in Abhängigkeit von deren Signalen die elektronische Steuerungseinrichtung (54) die jeweilige Drehwinkelstellung des ersten und zweiten Rotors (4, 10) steuert und/oder regelt.

8. Ventil nach Anspruch 6 und 7,
**dadurch gekennzeichnet, dass**
an den Mitnehmern (42, 50) und/oder Zahnrädern für den ersten und zweiten Rotor (4,10) den jeweiligen Stellpositionen der Rotoren (4,10) zugeordnete Magnete (58 a, 60 a) aufgenommen sind, und dass jeder Drehwinkelgeber (58, 60) einen in der fünften Ebene (56) angeordneten Sensor, insbesondere Hall-Sensor (58 b, 60 b,) umfasst, welcher unmittelbar unterhalb der Magnete (58 a, 60 a) auf der Elektronikplatine (54) angeordnet ist und bei einer Drehung des zugeordneten Rotors (4,10) von den Magneten (58 a, 60 a) überstrichen wird.

9. Ventil nach einem der vorhergehenden Ansprüche,
**dadurch gekennzeichnet, dass**
der Einlass (20 a) des zweiten Rotors (10) im Bereich von dessen Drehzentrum angeordnet ist, und dass die dem zweiten Rotor (10) zugeordneten Auslassbohrungen (30 a - f) in gleichmäßigen Umfangsabständen entlang einer Kreislinie um das Drehzentrum des zweiten Rotors (10) herum angeordnet sind.

10. Ventil nach einem der vorhergehenden Ansprüche,
**dadurch gekennzeichnet, dass**
dem ersten Rotor (4) ein zweiter Einlass (24 b) zugeordnet ist, über welchen die die zweite schlitzartige Ausnehmung (14) im zweiten Rotor (10) zum Spülen der dem zweiten Rotor (10) zugeordneten Abgänge (32 a, 32 f) über die Verbindungsleitung (28) mit Druckluft einer Druckquelle beaufschlagbar ist.

11. Ventil nach einem der vorhergehenden Ansprüche,
**dadurch gekennzeichnet, dass**
dem ersten Rotor (4) ein dritter Abgang (26 c) zugeordnet ist, über welchen in einer dritten Stellung des ersten Rotors (4) Heißwasser vom Einlass (24 a) aus mit hohem Druck einer Espresso-Brüheinrichtung zuführbar ist.

12. Ventil nach einem der vorhergehenden Ansprüche,
**dadurch gekennzeichnet, dass**
der Zufuhrbohrung (18a) des ersten Rotors (4) ein mit einem Sicherheitsventil verbundener zweiter Abgang (24b) zugeordnet ist, über welchen das dem Einlass (24a) zugeführt Heißwasser oder damit einhergehender Wasserdampf beim Überschreiten eines vorgegebenen Druck-Schwellenwerts entweichen kann.

13. Ventil nach einem der vorhergehenden Ansprüche,
**dadurch gekennzeichnet, dass**
unterhalb des ersten Rotors (4) und/oder des zweiten Rotors (10) ein vom Rotor überstrichener Hohlraum vorgesehen ist, welcher zur Erhöhung der Andruckkraft des Rotors (4,10) am Stator (16) über eine im Rotor gebildete Durchtrittsöffnung mit dem Einlass (24) in Strömungsverbindung steht.

14. Heißgetränkeautomat,
**gekennzeichnet durch**
ein Ventil nach einem der vorhergehenden Ansprüche.

## Claims

1. Shut-off and dispensing valve (1) for a hot drinks machine, comprising a housing (2), in which are received a first disc-like rotor (4), which is driven by a first motor (6), is rotatable into pre-determined first positions and has a first slot-like recess (12) formed therein, as well as a second rotor (10), which is rotatable into pre-determined second positions and has a second slot-like recess (14) formed therein, with each of which rotors a stator (16) with through-channels (18a, 26a, 20a, 30a-30f), an inlet (24a) for supplying hot water which is to be dispensed, and a plurality of outlets (26b, 26c, 32a-32f) are associated, through which the hot water can be supplied to a large number of brewing and mixing devices as a function of the position of the first and second rotor (4,10), **characterised in that** the second rotor (14) can be driven independently of the first rotor (4) by a separate second motor (48), and **in that** a first outlet (26a) of the first rotor (4) is connected to the inlet (20a) of the second rotor (10) via a connecting pipe (28) in such a way that the hot water is supplied to the inlet (20a) of the second rotor (14) via the connecting pipe (28) in a first connection position of the first rotor (4), and via these components can be supplied to the outlets (32a to 32f) associated with the second rotor (14) as a function of the respective position of the second rotor (14).

2. Valve according to claim 1, **characterised in that** the connecting pipe (28) and the inlets (24a, 24b) and outlets (26c, 26b, 32a-32f) are arranged in a first plane (34), the first and second stator (16) are arranged in a second plane (36) lying below, and the first and second rotor (4,10) are arranged in a third plane (38) lying below the second plane (36).

3. Valve according to claim 2, **characterised in that** the first and second stator are formed as a combined stator (16), which extends in the form of an assembly along the second plane (36) above the first and second rotor (4, 10).

4. Valve according to claim 3, **characterised in that** the connecting channel (28), the outlets (26c, 26b, 32a-32f) and the inlet (24a) for the hot water supplied are formed in an assembly which extends all the way over the first and second rotor (4, 10) in the first plane (34), and which can be placed on the housing (2) outwards from the first plane (34) in the manner of a housing cover (22) and is in sealing contact with the stator (16).

5. Valve according to any one of claims 2 to 4, **characterised in that** the first and second rotor (4, 10) are driven by the associated drive motor (6, 38) thereof via associated entertainment means (42, 50) and/or gear wheels, which are arranged in a fourth plane (52) lying below the third plane (38).

6. Valve according to claim 5, **characterised in that** an electronic control means with an electronic circuit board (54) for controlling the first and second motor (6, 48) is arranged in a fifth plane (56) which is arranged below the fourth plane (52).

7. Valve according to claim 5 and claim 6, **characterised in that** the gear wheels and/or entertainment means (42, 50) are associated with angle resolvers (58, 60), as a function of the signals of which the electronic control means (54) controls and/or regulates the respective angular position of the first and second rotor (4, 10).

8. Valve according to claim 6 and claim 7, **characterised in that** magnets (58a, 60a), which are associated with the respective set positions of the rotors (4, 10), are received on the entertainment means (42, 50) and/or gear wheels for the first and second rotor (4, 10), and **in that** each angle resolver (58, 60) comprises a sensor, in particular a Hall sensor (58b, 60b), which is arranged in the fifth plane (56), is arranged directly below the magnets (58a, 60a) on the electronic circuit board (54), and is swept over by the magnets (58a, 60a) when the associated rotor (4, 10) rotates.

9. Valve according to any one of the preceding claims, **characterised in that** the inlet (20a) of the second rotor (10) is arranged in the region of the centre of rotation thereof, and **in that** the outlet holes (30a-f) which are associated with the second rotor (10) are arranged at equal circumferential distances along a circle around the centre of rotation of the rotor (10).

10. Valve according to any one of the preceding claims, **characterised in that** a second inlet (24b) is associated with the first rotor (4), via which inlet the second slot-like recess (14) in the second rotor (10) can be acted upon with pressurised air from a pressure source via the connecting pipe (28) in order to clean the outlets (32a, 32f) which are associated with the second rotor (10).

11. Valve according to any one of the preceding claims, **characterised in that** a third outlet (26c) is associated with the first rotor (4), via which outlet hot water can be supplied to an exprcsso machine at a high pressure from the inlet (24a) when the first rotor (4) is in a third position.

12. Valve according to any one of the preceding claims, **characterised in that** the supply hole (18a) of the first rotor (4) is associated with a second outlet (24a) connected to a safety valve, via which outlet the hot water supplied to the inlet (24a) or accompanying steam can be discharged if a pre-selected pressure threshold is exceeded.

13. Valve according to any one of the preceding claims, **characterised in that** a cavity, which is swept over by the rotor, is provided below the first rotor (4) and/or the second rotor (10) and is in a flow connection with the inlet (24) via a through-opening formed in the rotor in order to increase the pressure of the rotor (4, 10) on the stator (16).

14. Hot drinks machine, **characterised by** a valve according to any one of the preceding claims.

## Revendications

1. Vanne d'arrêt et de distribution (1) pour un automate de boissons chaudes, comprenant un boîtier (2), dans lequel un premier rotor (4) en forme de disque, avec un premier évidement (12) en forme de fente formé dans le rotor, entraîné par un premier moteur (6) et pouvant tourner dans des premières positions prédéfinies et un second rotor (10), avec un second évidement (14) en forme de fente, formé à l'intérieur de ce rotor, pouvant tourner dans des secondes positions prédéfinies, sont logés, rotors auxquels sont attribués respectivement un stator (16) avec des canaux de passage (18a, 26a, 20a, 30a-30f), une entrée (24a) pour l'amenée d'eau chaude à répartir et une pluralité de sorties (26b, 26c, 32a - 32f), par lesquelles l'eau chaude peut être amenée en fonction de la position du premier et du second rotor (4, 10) à une pluralité de dispositifs d'échaudage et de mélange,
**caractérisée en ce que**
le second rotor (14) peut être entraîné au moyen d'un second moteur (48) séparé indépendamment du premier rotor (4), et **en ce qu'**une première sortie (26a) du premier rotor (4) est reliée à l'entrée (20a) du second rotor (10) par une conduite de liaison (28) de telle sorte que l'eau chaude est amenée dans une première position de liaison du premier rotor (4) par la conduite de liaison (28) à l'entrée (20a) du second rotor (14), et peut être amenée par celle-ci en fonction de la position respective du second rotor (14) à l'une des sorties (32a à 32f) attribuées au second rotor (14).

2. Vanne selon la revendication 1,
**caractérisée en ce que** la conduite de liaison (28) et les entrées (24a, 24b) et sorties (26c, 26b, 32a - 32f) sont disposées dans un premier plan (34), le premier et le second stator (16) dans un second plan (36) sous-jacent et le premier et le second rotor (4, 10) dans un troisième plan (38) situé au-dessous du second plan (36).

3. Vanne selon la revendication 2,
**caractérisée en ce que** le premier et le second stators sont réalisés sous forme de stator (16) commun, qui s'étend sous la forme d'un composant le long du second plan (36) au-dessus du premier et du second stators (4, 10).

4. Vanne selon la revendication 3,
**caractérisée en ce que**
le canal de liaison (28), les sorties (26c, 26b, 32a - 32f) ainsi que l'entrée (24a) pour l'eau chaude amenée sont formés dans un composant s'étendant de façon continue au-dessus du premier et du second rotors (4, 10) dans le premier plan (34), lequel composant peut être posé à partir du premier plan (34) à la façon d'un couvercle de boîtier (22) sur le boîtier (2), et s'applique de façon étanche sur le stator (16).

5. Vanne selon l'une quelconque des revendications 2 à 4,
**caractérisée en ce que**
le premier et le second rotors (4, 10) sont entraînés par leur moteur d'entraînement (6, 38) attribué au moyen d'entraîneurs (42, 50) et/ou de roues dentées attribuées et disposées dans un quatrième plan (52) situé au-dessous du troisième plan (38).

6. Vanne selon la revendication 5,
**caractérisée en ce que**
un dispositif de commande électronique avec une platine d'électronique (54) pour la commande du premier et du second moteurs (6, 48) est disposée dans un cinquième plan (56) disposé au-dessous du quatrième plan (52).

7. Vanne selon les revendications 5 et 6,
**caractérisée en ce que**
aux roues dentées et/ou entraîneurs (42, 50) sont attribués des capteurs d'angle de rotation (58, 60), en fonction des signaux desquels le dispositif de commande (54) électronique commande et/ou régule la position d'angle de rotation respective du premier et du second rotors (4, 10).

8. Vanne selon les revendications 6 et 7,
**caractérisée en ce que**,
des aimants (58a, 60a) attribués aux positions de réglage respectives des rotors (4, 10) sont logés sur les entraîneurs (42, 50) et/ou roues dentées pour le premier et le second rotors (4, 10) et **en ce que** chaque capteur d'angle de rotation (58, 60) comporte un capteur disposé dans le cinquième plan (56), en particulier un capteur de Hall (58b, 60b), qui est disposé directement au-dessous des aimants (58a, 60a) sur la platine d'électronique (54) et est balayé par les aimants (58a, 60a) lors d'une rotation du rotor (4, 10) attribué.

9. Vanne selon l'une quelconque des revendications précédentes,
**caractérisée en ce que**
l'entrée (20a) du second rotor (10) est disposée dans la zone de son centre de rotation et **en ce que** les alésages de sortie (30a - f) attribués au second rotor (10) sont disposés à des intervalles périphériques réguliers le long d'une ligne de cercle autour du centre de rotation du second rotor (10).

10. Vanne selon l'une quelconque des revendications précédentes,
**caractérisée en ce que**
au premier rotor (4) est attribuée une seconde entrée (24b), par laquelle le second évidement (14) en forme de fente dans le second rotor (10) peut être alimenté par la conduite de liaison (28) en air comprimé d'une source de pression pour le lavage des sorties (32a, 32f) attribuées au second rotor (10).

11. Vanne selon l'une quelconque des revendications précédentes,
**caractérisée en ce que**
au premier rotor (4) est attribuée une troisième sortie (26c), par laquelle de l'eau chaude peut être amenée à partir de l'entrée (24a) avec une pression élevée à un dispositif d'échaudage espresso lorsque que le premier rotor (4) est dans une troisième position.

12. Vanne selon l'une quelconque des revendications précédentes,
**caractérisée en ce que**
à l'alésage d'amenée (18a) du premier rotor (4) est attribuée une seconde sortie (24b) reliée à une vanne de sécurité, par laquelle l'eau chaude amenée à l'entrée (24a) ou de la vapeur d'eau accompagnant l'eau chaude peut s'échapper en cas de dépassement d'une valeur seuil de pression prédéfinie.

13. Vanne selon l'une quelconque des revendications précédentes,
**caractérisée en ce que**
au-dessous du premier rotor (4) et/ou du second rotor (10) est prévue une cavité balayée par le rotor, qui est en liaison d'écoulement avec l'entrée (24) au moyen d'une ouverture de passage formée dans le rotor pour augmenter la force d'appui du rotor (4, 10) sur le stator (16).

14. Automate de boissons chaudes,
**caractérisé par**
une vanne selon l'une quelconque des revendications précédentes.
